# EUROPEAN PATENT APPLICATION

(11) **EP 4 428 991 A1**
(43) Date of publication of application: **11.09.2024**
(21) Application number: 23883105.1
(22) Date of filing: 25.10.2023
(51) Int. Cl.: H01M 10/6551, H01M 10/647, H01M 10/6553, H01M 10/613, H01M 50/533, H01M 50/51, H01M 50/211, H01M 10/058, H01M 10/0525, H01M 4/525

(54) **BATTERY MODULE COMPRISING COOLING FIN**

(30) Priority: 26.10.2022 KR 20220138935; 23.10.2023 KR 20230142116
(71) Applicant: LG Energy Solution, Ltd., Seoul 07335 (KR)
(72) Inventor: LEE, Hanyoung, Daejeon 34122 (KR)
(74) Representative: Plasseraud IP
(86) International application number: PCT/KR2023/016684
(87) International publication number: WO 2024/091000

(57) **Abstract**

The present disclosure provides a battery module containing a plurality of secondary batteries in a module case, wherein the plurality of secondary batteries comprise a pouch type case including: two or more electrode assemblies each including a positive electrode, a negative electrode, and a separator interposed between the positive electrode and the negative electrode, a non-aqueous electrolyte, and two or more housing parts for housing the two or more electrode assemblies arranged in a lateral direction on a plane, and a connection part formed between the housing parts so that the two or more electrode assemblies can be electrically connected in series,
wherein the plurality of secondary batteries are stacked such that the connection parts face each other, and separation spaces are respectively formed between the plurality of secondary batteries in the connection part, and
wherein cooling fins are respectively located in the respective separation spaces.

## Description

### [TECHNICAL FIELD]

### Cross Citation with Related Application(s)

This application claims the benefit of Korean Patent Application No. 10-2022-0138935 filed on October 26, 2022 and Korean Patent Application No. 10-2023-0142116 filed on October 23, 2023 in the Korean Intellectual Property Office, the disclosures of which are incorporated herein by reference in their entirety.

The present disclosure relates to a battery module including cooling fins, and more particularly, to a battery module including a plurality of secondary batteries wherein the secondary batteries have a structure in which two or more electrode assemblies whose long side length is shortened are embedded in a pouch-type case including two or more housing parts, and wherein the battery module has a structure in which cooling fins are located in a separation space formed corresponding to the connection part that connects the housing parts in a state in which secondary batteries are stacked.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, along with the increase of the technological development and demand for mobile devices such as portable computers, portable phones, and cameras, the demand for secondary batteries has also sharply increased as an energy source. Among such secondary batteries is a lithium secondary battery exhibiting high energy density and operating potential, a long cycle lifespan, and a low self-discharge rate, in which much research has been carried out and which is now commercialized and widely used.

Moreover, the secondary batteries have recently been developed into structures that are capable of higher energy density, higher output, and longer life durability in response to user demands, and accordingly, the voltage usage range of secondary batteries is expanding to a level of 4.5V or higher.

Due to the increase in such a demand, in recent years, positive electrode materials of lithium nickel cobalt manganese oxide with a high Ni content have been used. However, there is a problem that as the Ni content increases, the possibility of occurrence of ignition due to thermal runaway at high temperature increases.

On the other hand, in recent years, high-capacity batteries are requested, and thus there is a tendency to fabricate into long cells in which the battery length is extended. At this time, in order to improve the safety of the secondary battery, the battery is cooled outside the secondary battery case, wherein it is difficult to cool at the center of the battery, i.e., the central part thereof, and as the cycle of the cell increases, there is a limit to ensuring battery safety in long cells due to heat accumulation.

Therefore, as the demand for high capacity increases, there is an urgent need to develop a technology that can effectively prevent battery operation and heat accumulation and thus reduce the possibility of occurrence of thermal runaway problems.

### [DETAILED DESCRIPTION OF THE INVENTION]

### [Technical Problem]

It is an object of the present disclosure to provide a battery module structure that effectively prevents heat accumulation in the central part that occurs when the secondary battery is driven, and thus reduce the possibility of occurrence of thermal runaway.

### [Technical Solution]

In order to achieve the above object, according to an embodiment of the present disclosure, there is be provided a battery module containing a plurality of secondary batteries in a module case,
wherein the plurality of secondary batteries comprise: two or more electrode assemblies each including a positive electrode, a negative electrode, and a separator interposed between the positive electrode and the negative electrode, a non-aqueous electrolyte, and a pouch type case including two or more housing parts for housing the two or more electrode assemblies arranged in a lateral direction on a plane and a connection part formed between the housing parts so that the two or more electrode assemblies can be electrically connected in series,
wherein the plurality of secondary batteries are stacked such that the connection parts face each other, and separation spaces are respectively formed between the plurality of secondary batteries in the connection part, and
wherein cooling fins are respectively located in the respective separation spaces.

In one specific embodiment, the two or more electrode assemblies may include a first electrode assembly and a second electrode assembly.

Herein, the first electrode assembly includes a first positive electrode tab extending from the positive electrode of the first electrode assembly, and a first negative electrode tab extending from the negative electrode of the first electrode assembly, the second electrode assembly includes a second positive electrode tab extending from the positive electrode of the second electrode assembly, and a second negative electrode tab extending from the negative electrode of the second electrode assembly, and the first negative electrode tab and the second positive electrode tab may be electrically connected by a connection lead. That is, the first electrode assembly and the second electrode assembly are electrically connected in series by the connection lead.

In another specific embodiment, the two or more housing parts include a first housing part that incorporates the first electrode assembly, and a second housing part that is arranged in a lateral direction on a plane while being spaced apart from the first housing part, and that houses the second electrode assembly, wherein the connection part is formed between the first housing part and the second housing part to connect them, and the connection lead may be located at the connection part.

Such a connection part has a recessed structure that is recessed in the stacking direction of the electrode assemblies compared to the two or more housing parts, and can form the separation space in a state in which the plurality of secondary batteries are stacked.

Specifically, the pouch type case may comprise a lower case including the two or more housing parts and a connection part, and an upper case covering the lower case.

On the other hand, in the battery module, the two or more electrode assemblies may be respectively configured such that the length of the short side on a plane is 80% to 100% of the length of the long side.

Moreover, the two or more electrode assemblies may have respectively fixing tapes attached in the stacking direction so as to fix the electrode assemblies at the long sides on a plane.

In another specific embodiment, the cooling fins may be further formed in a part of the space formed by the sealing part of the pouch type case in a state where the plurality of secondary batteries are stacked. Specifically, the cooling fins may be further formed in a space formed by sealing parts formed on one side surface in the whole length direction of the pouch type case where the planar length is long, and both side surfaces in the whole width direction where the planar length is short, in a state where a plurality of secondary batteries are stacked.

The cooling fin may be an air-cooled type or a water-cooled type.

In another specific embodiment, the positive electrode includes a positive electrode active material, and
the positive electrode active material may be a lithium transition metal oxide represented by the following Equation 1:

LiₐNi_{1-b}M_{b}O₂₋ₓAₓ (1)

wherein,
M is at least one selected from the group consisting of Ti, Mg, Al, Zr, Mn, and Co, and
A is an oxygen-substituted type halogen, and
1.00≤a≤1.05, 0≤b≤0.3, and 0≤x≤0.01.

More specifically, the M is (Mn_{c}Co_{d}), where 0≤c≤1.0, and 0≤d≤1.0.

Further, the negative electrode includes a negative electrode active material, and the negative electrode active material may include a graphite-based material.

### [BRIEF DESCRIPTION OF THE DRAWINGS]

FIG. 1 is a transmission side view of a battery module according to an embodiment of the present disclosure;
FIG. 2 is a partially enlarged view showing the arrangement of secondary batteries and cooling fins in the battery module of FIG. 1; and
FIG. 3 is an exploded top view of the secondary battery of FIG. 2.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the description, when a portion is referred to as "including" or "comprising" a certain component, it means that the portion can further include other components, without excluding the other components, unless otherwise stated.

A battery module according to one embodiment of the present disclosure is a battery module containing a plurality of secondary batteries in a module case,
wherein the plurality of secondary batteries comprise: two or more electrode assemblies each including a positive electrode, a negative electrode, and a separator interposed between the positive electrode and the negative electrode, a non-aqueous electrolyte, and a pouch type case including two or more housing parts for housing the two or more electrode assemblies arranged in a lateral direction on a plane and a connection part formed between the housing parts so that the two or more electrode assemblies can be electrically connected in series,
wherein the plurality of secondary batteries are stacked such that the connection parts face each other, and separation spaces are respectively formed between the plurality of secondary batteries in the connection part, and
wherein cooling fins are respectively located in the respective separation spaces.

In other words, the secondary battery of the present disclosure may have a structure in which two or more electrode assemblies are incorporated into one pouch-type case and connected in series. Specifically, the electrode assembly, which was originally manufactured as one piece, is reduced in size per one piece to form two or more electrode assemblies, and these are connected in series, thereby achieving the same effect with forming one electrode assembly.

However, as explained in the Background above, in the case of conventional long cells, there was a problem that the center part of the battery is not properly cooled, resulting in heat accumulation and runaway, whereby such problems can be partially improved by separating the long cells into two or more.

Further, the problems of heat accumulation and thermal runaway in the center part can be resolved by locating cooling fins in the separated portion.

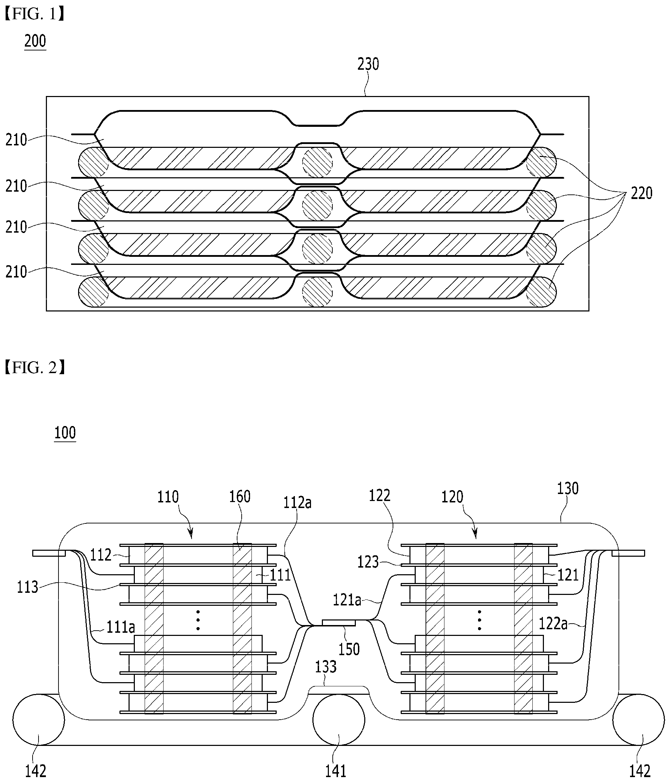

In order to explain such a structure in more detail, it will be described below with reference to FIGS. 1 to 3. To facilitate understanding, it will be described based on the drawings according to an embodiment, but the scope of the present disclosure is not limited thereto.

FIG. 1 schematically shows a transmission side view of a battery module according to an embodiment of the present disclosure.

Referring to FIG. 1, the battery module 200 has a structure in which a plurality of secondary batteries 210 are stacked so as to face each other in a module case 230, and in a state where the plurality of secondary batteries 210 are stacked, separation spaces S1, S2, and S3 are respectively formed between them, and cooling fins 220 are formed in the separation spaces S1, S2 and S3.

At this time, the separation spaces S 1, S2 and S3 are formed in the area where two or more electrode assemblies, which will be described in more detail below, are electrically connected in series, that is, in the area S 1 corresponding to the connection part of the pouch type case, Furthermore, they may be formed in a part of the spaces S2 and S3 formed by the outer peripheral sealing part of the pouch type case. Specifically, they may be further formed in the spaces S2 and S3 formed by sealing parts formed on one side surface in the whole length direction of the pouch type case where the planar length is long, and both side surfaces in the whole width direction where the planar length is short.

Therefore, according to the present disclosure, the cooling fins 220 can be located between the plurality of secondary batteries 210 being stacked, and the increase in overall volume is minimized, so that a cooling effect can be exhibited even in the middle part of the secondary battery without increasing the total volume of the battery module 200 compared to the prior art. Therefore, the ignition behavior can be further delayed, thereby effectively preventing a voltage drop.

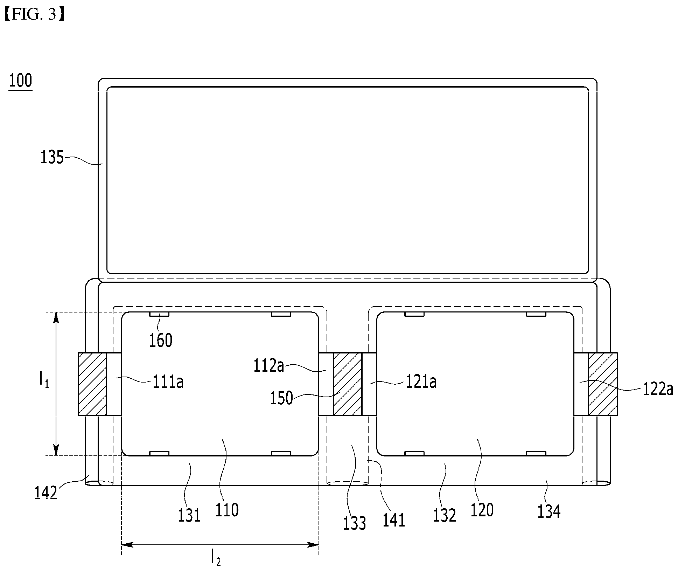

On the other hand, in the battery module 200 of the present disclosure, the secondary batteries 210 and cooling fins 220 will be described in detail, and in order to explain their formation relationship, FIG. 2 below shows an enlarged view of one secondary battery and a cooling fin, and FIG. 3 shows an exploded top view of a secondary battery in which the pouch type case is open without being sealed.

Referring to FIGS. 2 and 3 together, for convenience of explanation, one secondary battery and one cooling fin are referred to as a "secondary battery assembly".

In other words, the "secondary battery assembly" is to indicate that it includes a cooling fin formed on the outside in addition to the secondary battery, and is a concept that includes not only the shape formed integrally, but also the cooling fins simply being located on the outside of the secondary battery.

The secondary battery assembly 100 according to an embodiment of the present disclosure includes a structure in which the secondary battery includes two or more electrode assemblies 110 and 120 housed in a pouch type case 130 together with a non-aqueous electrolyte (not shown), and the two or more electrode assemblies 110 and 120 are electrically connected in series with each other.

Specifically, the two or more electrode assemblies 110 and 120 include a first electrode assembly 110 and a second electrode assembly 120, wherein the second electrode assembly 120 is arranged in a lateral direction on a plane from the first electrode assembly 110.

Herein, the first electrode assembly 110 has a structure including a first positive electrode 111, a first negative electrode 112, and a separator 113 interposed between the first positive electrode 111and the first negative electrode 112, and the second electrode assembly 120 has a structure including a second positive electrode 121, a second negative electrode 122, and a separator 123 interposed between the second positive electrode 121 and the second negative electrode 122.

Further, a first positive electrode tab 111a extends from the positive electrode 111 of the first electrode assembly 110, a first negative electrode tab 112a extends from the negative electrode 112, a second positive electrode tab 121a extends from the positive electrode 121 of the second electrode assembly 120, and a second negative electrode tab 122a extends from the negative electrode 122, wherein the first negative electrode tab 112a and the second positive electrode tab 121a are electrically connected by a connection lead 150. Therefore, the first electrode assembly 110 and the second electrode assembly 120 may be electrically connected in series.

Further, the first positive electrode tab 111a and the second negative electrode tab 122a, excluding the first negative electrode tab 112a and the second positive electrode tab 121a used for serial connection, are connected to leads extending to the outside of the pouch type case 130 in different directions.

The figure discloses a secondary battery consisting of two electrode assemblies, but the number of electrode assemblies is not limited, and two or more may be connected in series. However, a space for serial connection is required, and in this part, power generation elements cannot be included, and thus, in consideration of energy density per volume, etc., it may be more preferable to consist of two electrode assemblies.

In the present disclosure, the purpose of including two or more electrode assemblies 110 and 120 in the secondary battery is to prevent heat accumulation in the center part by dividing the conventional long cell into two at the side whose length is long. Therefore, the two or more electrode assemblies 110 and 120 are configured such that the length li of the short side on a plane may be 80% to 100% of the length l₂ of the long side, and specifically, it may be 90% to 100%.

Further, the two or more electrode assemblies 110 and 120 are not limited as long as they have a conventional structure, and may have a shape in which unit electrodes and unit separators are alternately stacked, respectively. Alternatively, they may be configured so as to stack unit cells, for example, full cells in which electrodes having different polarities are arranged on both sides, bi-cells in which electrodes having the same polarities are arranged on both sides, and monocells in which one electrode and a separator are stacked.

In this case, in order to prevent mismatches from occurring when each component or unit cell is arranged, two or more electrode assemblies 110 and 120 may have respectively fixing tapes 160 attached in the stacking direction so as to fix the electrode assemblies 110 and 120 on the long sides on a plane. Although the figure illustrates a configuration in which electrode assemblies 110 and 120 are fixed with two pairs of fixing tapes, the number thereof is not limited.

On the other hand, since the secondary battery of the present disclosure includes two or more electrode assemblies 110 and 120 in one secondary battery, it includes a pouch type case 130 having a special structure that can house them.

Specifically, the pouch type case 130 includes two or more housing parts 131 and 132 that can house two or more electrode assemblies 110 and 120. Specifically, the two or more housing parts 131 and 132 include a first housing unit 131 that incorporates the first electrode assembly 110, and a second housing part 132 that is arranged in the lateral direction on a plan while being spaced apart from the first housing part 131 and that houses the second electrode assembly 120.

Further, the pouch type case 130 includes a connection part 133 that connects the first housing part 131 and the second housing part 132, and a connection lead 150 for connecting the first negative electrode tab 111a and the second positive electrode tab 121a is located in this connection part 133.

Therefore, the connection part 133 located between the first housing part 131 and the second housing part 132 does not require a space enough to house the electrode assemblies 110 and 120, and it is sufficient if it is a shape in which the connection lead 150 is located safely. Therefore, as illustrated in FIG. 2, the connection part forms a recessed structure that is recessed in the stacking direction of the electrode assemblies 110 and 120 compared to the first housing part 131 and the second housing part 132.

Therefore, as illustrated in FIG. 1, such a recessed part forms a separation space S1 in the state in which the secondary batteries are stacked, and the cooling fin 141, which will be described later, can be effectively located by such a space S1.

The structure of the pouch type case 130 may be a bag-like case consisting of one case, or may be divided into an upper case and a lower case, without being limited thereto. However, in order to effectively form the separation space S1, for example, the structure may include a lower case 134 that includes a first housing part 131, a second housing part 132, and a connection part 133, and an upper case 135 that covers the lower case 134 and is subsequently sealed. This pouch type case 130 may be made of aluminum laminate sheet, the materials that make up this pouch type case 130 are disclosed in detail in the art, and therefore, a detailed description thereof will be omitted in herein.

On the other hand, according to a conventional technique, cooling fins could not be located in the center part of the pouch type case 130, but according to the present disclosure, two electrode assemblies 110 and 120 are located in a case including two housing parts 131 and 132, so that a connection part is formed with a recessed part between the housing parts 131 and 132, Also, when a plurality of secondary batteries are stacked, a separation space is formed so that the cooling fin 141 can be located, and thus, cooling can also be performed in the center part of the secondary battery.

Therefore, heat accumulation in the center part as in the conventional case can be prevented and the possibility of occurrence of thermal runaway can be significantly reduced.

Further, in order to wholly achieve the cooling of the secondary battery, cooling fins 142 may be formed in a part of the space formed by the sealing part of the pouch type case 130 as illustrated in FIGS. 1 and 2.

Specifically, the cooling fins 142 may be further formed in a space formed by sealing parts formed on one side surface in the whole length direction of the pouch type case 130 where the planar length is long, and both side surfaces in the whole width direction where the planar length is short. Of course, they may also be formed in all lateral directions.

Herein, the cooling fin is not limited as long as it has a conventionally known configuration, and can be applied. For example, they may be an air-cooled type or a water-cooled type cooling fin. Specifically, a water-cooled type cooling fin may be used to further increase cooling performance.

Herein, the cooling fins 141 located between the housing parts 131 and 132 and the secondary battery sealing parts, that is, the cooling fins 142 that surround the outer peripheral surface of the secondary battery, are not limited, and may communicate with each other or formed individually, but specifically, it is preferable that they communicate with each other.

In the case of such a structure, while having an energy density and capacity substantially similar to those of a long cell, cooling is effectively performed and the safety can be improved.

On the other hand, the components included in such secondary batteries will be described in detail below.

The positive electrode includes a positive electrode active material,
the positive electrode active material may be a lithium transition metal oxide represented by the following Chemical Formula 1.

LiₐNi_{1-b}M_{b}O₂₋ₓAₓ (1)

wherein,
M is at least one selected from the group consisting of Ti, Mg, Al, Zr, Mn, and Co, and
A is an oxygen-substituted type halogen, and
1.00≤a≤1.05, 0≤b≤0.3, and 0≤x≤0.01.

Specifically, the M may be (Mn_{c}Co_{d}), where 0≤c≤1.0, and 0≤d≤1.0. That is, in the secondary battery assembly according to the present disclosure, the positive electrode may be a lithium nickel-based transition metal oxide with a high Ni content containing Ni of 0.7 or more.

When such an oxide with a high Ni content is used for a positive electrode active material, it has advantages such as high capacity and high energy density, but it lacks high temperature stability, so it is more suitable for secondary battery assemblies having the above structure as in the present disclosure.

More specifically, the molar ratio of Ni may be 0.8 to 0.9, that is, 0.1≤b≤0.2.

Further, the positive electrode may, in addition to the positive electrode active material represented by Chemical Formula 1, include a layered compound such as lithium cobalt oxide (LiCoO₂) or lithium nickel oxide (LiNiO₂) or a compound substituted with one or more transition metals; lithium manganese oxides such as chemical formula Li₁₊ₓMn₂₋ₓO₄ (where, x is 0 to 0.33), LiMnO₃, LiMn₂O₃, LiMnO₂; lithium copper oxide (Li₂CuO₂); vanadium oxides such as LiV₃O₈, L₁V₃O₄, V₂O₅, and Cu₂V₂O₇; a Ni-site type lithium nickel oxide represented by chemical formula LiNi₁₋ₓMₓO₂ (where, M = Co, Mn, Al, Cu, Fe, Mg, B or Ga, and x= 0.01 to 0.3); lithium manganese composite oxide represented by chemical formula LiMn₂₋ₓMₓO₂ (where, M = Co, Ni, Fe, Cr, Zn or Ta, and x = 0.01 to 0.1) or Li₂Mn₃MO₈ (where, M = Fe, Co, Ni, Cu or Zn ); LiMn₂O₄ with a Li portion of chemical formula substituted with an alkaline earth metal ion; a disulfide compound; Fe₂(MoO₄)₃, and the like, and mixtures thereof may be used.

Furthermore, the positive electrode may have a structure in which a positive electrode material containing the positive electrode active material is formed on a positive electrode current collector, and the positive electrode material may, in addition to the positive electrode active material, further include a conductive material, a binder, and optionally a filler.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one alone or a mixture of two or more of them can be used. The conductive material may be included in an amount of 1 wt.% to 30 wt.%, specifically 1 wt.% to 10 wt.%, and more specifically 1 wt.% to 5 wt.%, based on the total weight of the positive electrode material.

The binder performs the role of improving adhesion between positive electrode active material particles and an adhesive force between the positive electrode active material and the current collector. Specific examples thereof include polyvinylidene fluoride (PVDF), a vinylidene fluoride-co-hexafluoropropylene copolymer (PVDF-co-HFP), polyvinyl alcohol, polyacrylonitrile, carboxymethyl cellulose (CMC), starch, hydroxypropylcellulose, regenerated cellulose, polyvinyl pyrrolidone, polytetrafluoroethylene, polyethylene, polypropylene, an ethylene-propylene-diene monomer (EPDM), a sulfonated EPDM, styrene butadiene rubber (SBR), fluoro rubber, or various copolymers thereof, and any one alone or a mixture of two or more of them can be used. The binder may be included in an amount of 1 wt.% to 30 wt.%, specifically 1 wt.% to 10 wt.%, and more specifically 1 wt.% to 5 wt.%, based on the total weight of the positive electrode material.

The filler is optionally used as a component to suppress electrode expansion. The filler is not particularly limited so long as it is a fibrous material that does not cause a chemical change in the corresponding battery. Examples of the filler include olefin-based polymers such as polyethylene and polypropylene; and fibrous materials such as glass fiber and carbon fiber, and the content may be 0 to 10 wt.% based on the total weight of the positive electrode material.

The positive electrode current collector is not particularly limited as long as it has conductivity while not causing chemical changes to the battery, and for example, stainless steel, aluminum, nickel, titanium, calcined carbon, or aluminum or stainless steel having a surface treated with carbon, nickel, titanium, silver, and the like can be used. In addition, the positive electrode current collector may have a thickness of 3 *µ*m to 500 *µ*m, and may have fine irregularities formed on the surface of the current collector to increase the adhesion strength of the positive electrode active material. For example, it may be used in various forms such as films, sheets, foils, nets, porous bodies, foams, and nonwoven fabrics.

The negative electrode may also have a structure in which a negative electrode material containing a negative electrode active material is formed on a negative electrode current collector, and the negative electrode material may also further include a conductive material and binder as described above, and optionally a filler, along with the negative electrode active material.

As the negative electrode active material, a compound capable of reversible intercalation and deintercalation may be used. Specific examples thereof may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiOₓ (0 < x < 2), SnO₂, vanadium oxide, and lithium vanadium oxide; a composite containing the metallic compound and the carbonaceous material, such as Si-C composite or Sn-C composite, and any one alone or a mixture of two or more thereof can be used. In addition, as the negative electrode active material, a metal lithium thin film may be used. Further, the carbonaceous material may be both low-crystalline carbon and highly-crystalline carbon. Soft carbon and hard carbon are typical low-crystalline carbon. Typical examples of the highly-crystalline carbon include amorphous, platelike, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes. However, in detail, it may include a graphite-based material.

The negative electrode current collector is not particularly limited as long as it has high conductivity without causing chemical changes to the corresponding battery. For example, copper, stainless steel, aluminum, nickel, titanium, sintered carbon, a material formed by surface-treating a surface of copper or stainless steel with carbon, nickel, titanium, silver, or the like, an aluminumcadmium alloy, and the like can be used. In addition, the negative electrode current collector is generally formed to a thickness of 3 *µ*m to 500 *µ*m, and similarly to the positive electrode current collector, the negative electrode current collector may have may have fine irregularities formed on the surface thereof to enhance the bonding strength between the negative electrode active materials. For example, it can be used in various forms such as a film, a sheet, a foil, a net, a porous body, a foaming body, and a non-woven fabric structure.

The separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Further, a typical porous non-woven fabric, for example, a non-woven fabric formed of glass fiber having a high melting point, polyethylene terephthalate fiber, or the like may be used. Further, a coated separator including a ceramic component or a polymer material may be used to secure heat resistance or mechanical strength, and may be selectively used in a single-layered or a multi-layered structure.

In addition, the non-aqueous electrolyte used in the present disclosure may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the non-aqueous electrolyte may include an organic solvent and a lithium salt.

Any organic solvent may be used without particular limitation as long as it can serve as a medium through which ions involved in an electrochemical reaction of a battery can move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), methylethyl carbonate(MEC), ethylmethyl carbonate(EMC), ethylene carbonate(EC), and propylene carbonate (PC); an alcohol-based solvent such as ethyl alcohol and isopropyl alcohol; nitriles such as R-CN (where R is a C2 to C20 linear, branched, or cyclic hydrocarbon group, and may include a double-bond aromatic ring or ether bond); amides such as dimethylformamide; dioxolanes such as 1,3-dioxolane; or sulfolanes can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/discharging performance of a battery, is more preferable. In this case, when the cyclic carbonate and the linear carbonate are mixed together in a volume ratio of about 1:1 to about 1:9, the electrolyte can exhibit excellent performance.

The lithium salt can be used without particular limitation as long as it may provide lithium ions used in a lithium secondary battery. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like can be used. The lithium salt may be used at a concentration range of 0.1 M to 2.0 M. When the concentration of the lithium salt is included within the above range, the electrolyte has suitable conductivity and viscosity, thereby exhibiting excellent electrolyte performance, and lithium ions can effectively move.

In order to improve the life characteristics of a battery, suppress the decrease in battery capacity, and improve the discharge capacity of the battery, the non-aqueous electrolyte may, in addition to the above components, further include one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like. At this time, the additive may be included in an amount of 0.1 wt.% to 5 wt.% based on a total weight of the non-aqueous electrolyte.

As described above, the battery module according to the present disclosure can be used as a device power source in the field of portable devices such as a mobile phone, a notebook computer, and a digital camera, and electric vehicles such as a hybrid electric vehicle(HEV).

Methods for manufacturing battery modules excluding the above structural changes are known in the art, and thus a detailed description thereof will be omitted herein.

It will be apparent to those skilled in the art that various modifications and variations can be made in the present disclosure without departing from the spirit and scope of the present disclosure.

### [Description of Reference Numerals]

100: secondary battery assembly,
110: first electrode assembly,
111: first positive electrode,
112: first negative electrode,
113: first separator,
111a: first positive electrode tab,
112a: first negative electrode tab,
120: second electrode assembly,
121: second positive electrode,
122: second negative electrode,
123: second separator,
121a: second positive electrode tab,
122a: second negative electrode tab,
130: pouch type case,
131: first housing part,
132: second housing part,
133: connection part,
141, 142: cooling fins,
150: connection lead,
160: fixing tape.

### [Industrial Applicability]

As set forth above, according to the present disclosure, a battery module having a structure that reduces the size of the electrode assembly of a secondary battery, increases the number of electrode assemblies, connects them in series, and further arranges cooling fins at the connection part can be provided, thereby effectively preventing heat accumulation in the center part that occurs when the secondary battery is driven, and reducing the possibility of occurrence of thermal runaway.

## Claims

1. A battery module containing a plurality of secondary batteries in a module case,
wherein the plurality of secondary batteries comprise: two or more electrode assemblies each including a positive electrode, a negative electrode, and a separator interposed between the positive electrode and the negative electrode, a non-aqueous electrolyte, and a pouch type case including two or more housing parts for housing the two or more electrode assemblies arranged in a lateral direction on a plane and a connection part formed between the housing parts so that the two or more electrode assemblies can be electrically connected in series,
wherein the plurality of secondary batteries are stacked such that the connection parts face each other, and separation spaces are respectively formed between the plurality of secondary batteries in the connection part, and
wherein cooling fins are respectively located in the respective separation spaces.

2. The battery module of claim 1, wherein:
the two or more electrode assemblies include a first electrode assembly and a second electrode assembly,
wherein the first electrode assembly includes a first positive electrode tab extending from the positive electrode of the first electrode assembly, and a first negative electrode tab extending from the negative electrode of the first electrode assembly, the second electrode assembly includes a second positive electrode tab extending from the positive electrode of the second electrode assembly, and a second negative electrode tab extending from the negative electrode of the second electrode assembly, and the first negative electrode tab and the second positive electrode tab are electrically connected by a connection lead.

3. The battery module of claim 2, wherein:
the two or more housing parts include a first housing part that incorporates the first electrode assembly, and a second housing part that is arranged in a lateral direction on a plane while being spaced apart from the first housing part, and that houses the second electrode assembly, wherein the connection part is formed between the first housing part and the second housing part to connect them.

4. The battery module of claim 3, wherein:
the connection lead is located at the connection part.

5. The battery module of claim 1, wherein:
the connection part has a recessed structure that is recessed in the stacking direction of the electrode assemblies compared to the two or more housing parts, and forms the separation space in a state in which the plurality of secondary batteries are stacked.

6. The battery module of claim 1, wherein:
the pouch type case comprises a lower case including the two or more housing parts and a connection part, and an upper case covering the lower case.

7. The battery module of claim 1, wherein:
the two or more electrode assemblies are respectively configured such that the length of the short side on a plane is 80% to 100% of the length of the long side.

8. The battery module of claim 1, wherein:
the two or more electrode assemblies have respectively fixing tapes attached in the stacking direction so as to fix the electrode assemblies at the long sides on a plane.

9. The battery module of claim 1, wherein:
the cooling fin is further formed in a part of the space formed by the sealing part of the pouch type case in a state where the plurality of secondary batteries are stacked.

10. The battery module of claim 9, wherein:
the cooling fins are further formed in a space formed by sealing parts formed on one side surface in the whole length direction of the pouch type case where the planar length is long, and both side surfaces in the whole width direction where the planar length is short, in a state where a plurality of secondary batteries are stacked.

11. The battery module of claim 1, wherein:
the cooling fin is an air-cooled type or a water-cooled type.

12. The battery module of claim 1, wherein:
the positive electrode includes a positive electrode active material, and
the positive electrode active material is a lithium transition metal oxide represented by the following Equation 1:
LiₐNi_{1-b}M_{b}O₂₋ₓAₓ (1)
wherein,
M is at least one selected from the group consisting of Ti, Mg, Al, Zr, Mn, and Co, and
A is an oxygen-substituted type halogen, and
1.00≤a≤1.05, 0≤b≤0.3, and 0≤x≤0.01.

13. The battery module of claim 11, wherein:
the M is (Mn_{c}Co_{d}), where 0≤c≤1.0, and 0≤d≤1.0.

14. The battery module of claim 1, wherein:
the negative electrode includes a negative electrode active material, and
the negative electrode active material includes a graphite-based material.
